# EUROPEAN PATENT SPECIFICATION

(11) **EP 2 091 214 B1**
(45) Date of publication and mention of the grant of the patent: **22.01.2014**
(21) Application number: 07832597.4
(22) Date of filing: 27.11.2007
(51) Int. Cl.: H04M 1/2745, H04M 1/56

(54) **TELEPHONE TERMINAL, TRANSMISSION METHOD, AND PROGRAM**
TELEFONENDGERÄT, ÜBERTRAGUNGSVERFAHREN UND PROGRAMM
TERMINAL TÉLÉPHONIQUE, PROCÉDÉ DE TRANSMISSION, ET PROGRAMME

(30) Priority: 08.12.2006 JP 2006331678
(43) Date of publication of application: 19.08.2009
(73) Proprietor: NEC Corporation, Minato-ku Tokyo 108-8001 (JP)
(72) Inventor: KAIDA, Soh, Minato-ku Tokyo 108-8001 (JP)
(74) Representative: Vossius & Partner
(86) International application number: PCT/JP2007/072872
(87) International publication number: WO 2008/069054

(56) References cited:
- WO-A1-00/22800
- WO-A1-01/69896
- WO-A1-02/062043
- WO-A1-03/067860
- JP-A- 11 234 745

## Description

The present invention relates to a telephone terminal, and in particular, to a telephone terminal issuing an outside-line call by adding an outside-line special number.

### RELATED ART

Recently, functions have been developed for cellulars, and it has been attempted to produce a cellular in which a wireless LAN function is installed so that one cellular connects to both of the IMT-2000 network as the cellular network and the wireless LAN. And the wireless LAN may be adopted as, for example, extensions in a firm by use of the WLAN telephone. On the other hand, to connect such a cellular to an outside line by use of the WLAN telephone, it is required to issue a call by adding an outside-line special number (e.g., 0). There has been developed a function in which to mitigate the operation of adding the outside-line special number at outside-line call issuance, whether or not the outside-line call is an outside-line call is automatically determined using the inputted number to thereby automatically add the outside-line special number to the dial number, which is disclosed in, for example, Patent Document 1 described below.

Moreover, an ordinary cellular is provided with a function to store transmitted dial data as a transmission history in a memory; according to such transmission history storage function, when an outside-line call is issued, the data with the added outside-line special number as described above remains in the transmission history. JP-A-11-234745 discloses a digital portable terminal wherein a memory stores a current, connection mode indicating to which of a private or public base station the terminal device is connected.

Patent Document D1: Japanese Patent Laid-Open Publication 2000-228695

### DISCLOSURE OF THE INVENTION

### PROBLEM TO BE SOLVED BY THE INVENTION

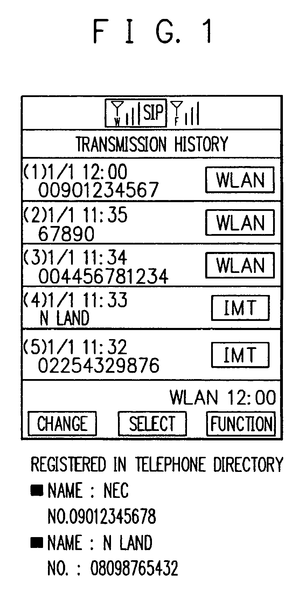

However, the transmission history of a cellular is often used to conduct redialing. In such case, it likely occurs, at redialing, that an outside-line special number is further added to the number to which an outside-line special number has been added, leading to a problem that the call cannot be correctly issued. Additionally, by collating the transmission history with the telephone directory, it is possible to display the name of the call destination; however, there occurs a problem in the search processing, i.e., a no-hit condition results in the search for the data registered in the telephone directory data. For example, in a display example of the transmission history shown in FIG. 1, items (1) and (3) indicate cases in which an outside-line call is transmitted from a WLAN area. Here, item (1) indicates a history of dialing a cellular number "09012345678", but "009012345678" obtained by adding the outside-line special number "0" thereto remains as a record in the transmission history. Similarly, item (3) indicates a history of dialing a cellular number "04456781234", but "004456781234" obtained by adding the outside-line special number "0" thereto remains as a record in the transmission history. As a result, if the redialing is carried out by use of item (1) or (3) again, the outside-line special number is added twice (e.g., "0009012345678"), which causes a problem that the call cannot be correctly issued.

Therefore, it is an object of the present invention to mitigate the above difficulty of the related art and particularly to improve usability of a telephone terminal requiring an outside-line special number for the user to utilize the transmission history.

### MEANS FOR SOLVING THE PROBLEM

In this situation, a telephone terminal as an aspect of the present invention is characterized by including:
a transmission instruction reception unit that receives a transmission instruction in which a predetermined dial number is specified;
a transmission unit that executes transmission processing based on the dial number specified; and
a transmission number storage processing unit that stores a transmission number in a storage unit, wherein
the transmission number storage processing unit stores, by removing a predetermined outside-line special number which is to be added or has been added to the dial number specified in the transmission instruction reception unit, the dial number as the transmission number.

In accordance with the invention described above, when the user inputs a dial number or selects a dial number stored in the telephone directory data and a call issuing operation is carried out, call issuing processing is executed on the basis of the call issuing number. In this situation, if the call destination is an outside line, the user inputs a number by adding an outside-line special number or a telephone terminal automatically adds an outside-line special number, and then the call issuing processing is executed. And before or after the call issuing processing, the dial number is stored as a call transmission or issuance history; however, the outside-line special number is not added, and only the dial number is stored as a call transmission history. Therefore, the call transmission history matches with the telephone directory data; hence, when the call transmission history is displayed on the telephone terminal, the user can easily understand the history. Additionally, in the redialing to be conducted using the call transmission history, if it is not required for the call issuance to add an outside-line special number, the dial number can be directly utilized, and hence usability can be improved.

Moreover, it is characterized that the transmission number storage processing unit operates before the transmission unit executes the transmission processing and directly stores, as the transmission number, the dial number specified in the transmission instruction reception unit. Or, it is characterized that the transmission number storage processing unit detects the outside-line special number already added to the dial number and deletes the outside-line special number to store the dial number as the transmission number.

As a result, even in the outside-line call issuance with an outside-line special number added thereto, the dial number is stored before the outside-line special number is added; or, even if an outside-line special number has been added, the special number is removed before the dial number is stored. Therefore, it is possible to more securely store the dial number without including the outside-line special number, which increases usability for the user as in the above-described case.

Furthermore, it is characterized that the transmission unit has a function in which the transmission unit automatically adds the outside-line special number to the dial number specified and executes transmission processing based on the number to which the outside-line special number has been added. Hence, at call transmission, since the outside-line special number is automatically added to the dial number to execute the transmission processing, the user's operation is facilitated. Also, particularly, the dial number is recorded in the transmission history without adding the outside-line special number thereto; hence, also when conducting the redialing by use of the transmission history, the outside-line special number is added to conduct the call issuance; hence, the disadvantage in which the outside-line special number is added a plurality of times can be suppressed, and the outside-line transmission can be more securely carried out.

Also, it is characterized by including a communication unit respectively connectible to an extension network enabling an extension call and connectible to a cellular network, wherein the transmission unit detects whether or not the transmission instruction is an outside-line transmission instruction via the extension network, and executes, if the transmission instruction is an outside-line transmission instruction via the extension network, transmission processing based on the number obtained by adding the outside-line special number to the dial number specified. Additionally, it is characterized that the transmission unit detects whether the transmission is outside-line transmission or extension transmission on the basis of the dial number specified, and executes, if the transmission is outside-line transmission via the extension network, the transmission processing based on the number obtained by adding the outside-line special number to the dial number specified.

As above, for a telephone terminal capable of connecting to the extension network and the cellular network, particularly, when the call passes the extension network, the outside-line special number is automatically added for the outside-line transmission; however, the dial number to which the outside-line special number is not added remains in the call transmission history. Hence, even if the redialing is thereafter carried out by use of the call transmission history, the call can be appropriately conducted and the usability can be improved.

Also, a program as another aspect of the present invention is characterized by making a telephone terminal implement:
a transmission instruction reception unit that receives a transmission instruction in which a predetermined dial number is specified;
a transmission unit that executes transmission processing based on the dial number specified; and
a transmission number storage processing unit that stores, by removing a predetermined outside-line special number which is to be added or has been added to the dial number specified in the transmission instruction reception unit, the dial number as the transmission number in a storage unit.

Furthermore, a transmission method as another aspect of the present invention is a transmission method in which a transmission instruction in which a predetermined dial number is specified is received and transmission processing is executed to record a transmission number before and after the transmission processing, characterized in that
the telephone terminal records, when recording the transmission number, the dial number by removing a predetermined outside-line special number which is to be added or has been added to a dial number of a transmission destination, as the transmission number.

And it is characterized that the telephone terminal directly stores, before the transmission processing, the specified dial number as the transmission number. Or, it is characterized that the telephone terminal detects the outside-line special number already added to the dial number and deletes the outside-line special number to store the dial number as the transmission number.

Also, it is characterized that the telephone terminal adds a predetermined outside-line special number to execute the transmission processing. Moreover, it is characterized that the telephone terminal is connectible to an extension network enabling an extension call and to a cellular network and the telephone terminal receives the transmission instruction, detects whether or not the transmission instruction is an outside-line transmission instruction via the extension network, and executes, if the transmission instruction is an outside-line transmission instruction via the extension network, the transmission processing based on the number obtained by adding the outside-line special number to the specified dial number.

In addition, it is characterized that the telephone terminal detects whether the transmission is outside-line transmission or extension transmission on the basis of the dial number specified, and executes, if the transmission is outside-line transmission via the extension network, the transmission processing based on the number obtained by adding the outside-line special number to the specified dial number.

The inventions of the program and the method which are configured as described above also operate in a similar way as for the telephone terminal described above; hence, the objects of the present invention described above can be achieved.

### ADVANTAGES OF THE INVENTION

The present invention is configured and functions as above; hence, according to the present invention, even if an outside-line call is transmitted by adding an outside-line special number to a dial number, only the dial number to which the outside-line special number is not added is stored in the call transmission history. Therefore, the call transmission history matches with the telephone directory data; hence, when the call transmission history is displayed on the telephone terminal, the user can easily understand the history. Additionally, in the redialing to be conducted using the call transmission history, if it is not required for the call transmission to add an outside-line special number, the history can be directly utilized, and hence usability is improved, leading to a remarkable advantage which cannot be obtained in the related art.

### BEST MODE FOR CARRYING OUT THE INVENTION

The present invention has a characteristic in a point wherein in a telephone terminal, even if an outside-line number is added at outside-line call transmission, only the dial number from which the outside-line special number has been removed remains in the call transmission history. Hereinbelow, description will be given of an exemplary embodiment including, as an example of the telephone terminal, a cellular capable of connecting to the wireless LAN and the cellular network; however, the present invention is not necessarily restricted by the connectibility to the wireless LAN and the cellular network; in addition, the type of the telephone is not limited to the cellular. That is, any telephone terminal is available.

### First Exemplary Embodiment

Description will be given of a first exemplary embodiment of the present invention by referring to FIGS. 2 to 8. FIG. 2 is a diagram showing an appearance of an overall telephone network. FIGS. 3 to 5 are diagrams showing structure of a cellular and FIG. 6 is a diagram showing an example of a display screen of the cellular. FIGS. 7 and 8 are diagrams showing operation of the cellular.

### [Structure]

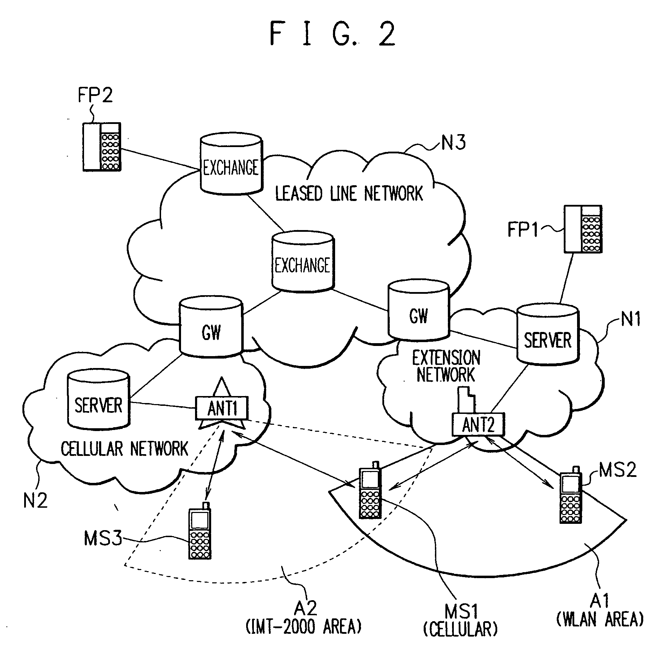

First, a conceptual diagram of a telephone is shown in FIG. 2. This diagram shows a situation wherein telephone networks, i.e., an extension network N1 (extension network) constructed in, for example, a company, a cellular network N2 (IMT-2000 network) constructed by a cellular communication carrier, and a leased line network N3 are connected via gateways (GW) to each other. Here, a wireless communication area of the extension network N1 is a wireless LAN area A1 (WLAN area) and a wireless communication area of the cellular network N2 is an IMT-2000 area A2. Cellulars included in the IMT-2000 area A2 of the cellular network N2 are indicated by symbols MS1 and MS3 and cellulars included in the wireless LAN area A1 of the extension network N1 are indicated by symbols MS1 and MS2. Also, a fixed telephone connected to the extension network N1 is represented by a symbol FP1 and a fixed telephone connected to the leased line network N3 is represented by a symbol FP2. In this regard, the telephone networks in which the telephone terminal according to the present invention is adopted are not restricted by the configuration described above.

And the cellular MS1 is capable of connecting to the extension network N1 and the cellular network N2 and is communicable on the extension and the outside line. That is, the cellular MS1 can establish extension connections to other telephone terminals MS2 and FP1 in the extension network N1 by issuing an extension call from the WLAN area A1, and can establish outside-line connection to the telephone terminals MS3 and FP2 in cellular network N2 and the leased line network N3 by transmitting an outside-line call from the IMT-2000 area A2. Moreover, the cellular MS1 can issue an outside-line call via the extension network N1 by issuing the call with an outside-line special number (outside-line prefix) added thereto, from the WLAN area A1, and hence the cellular MS1 is capable of connecting to the telephone terminals MS3 and FP2 on the cellular network N2 and the leased line network M3. Next, description will be given in detail of the cellular MS1 which can be used as both of the extension telephone and the outside-line telephone.

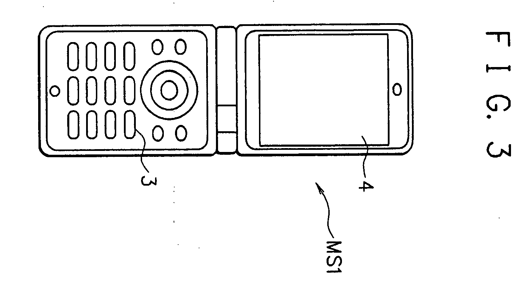

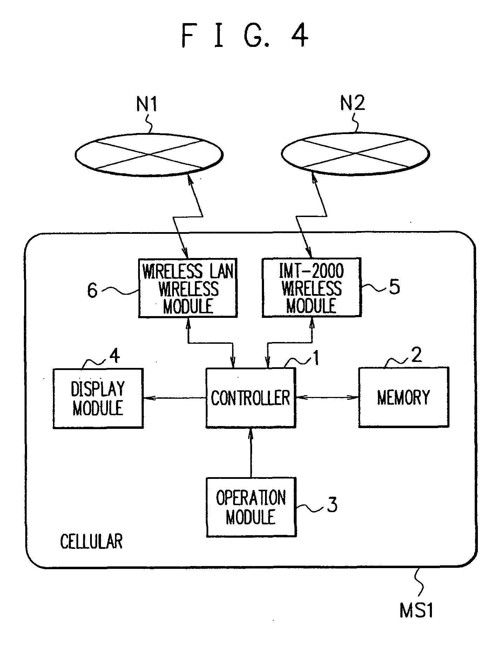

FIG. 3 shows an appearance diagram of the cellular MS1, and FIG. 4 shows a block diagram of its configuration. As shown in FIGS. 3 and 4, the cellular MS1 includes a controller 1 to control operation of the cellular itself, a memory 2 to keep information therein, an operation module 3 to receive an input of an operation instruction from the user to the cellular MS1, a display module 4 to conduct display and the like of the transmission history and the like, an IMT-2000 wireless module 5 to connect to the cellular network N2 as the IMT-2000 network, and a wireless LAN wireless module 6 to connect via the wireless LAN to the extension network N1.

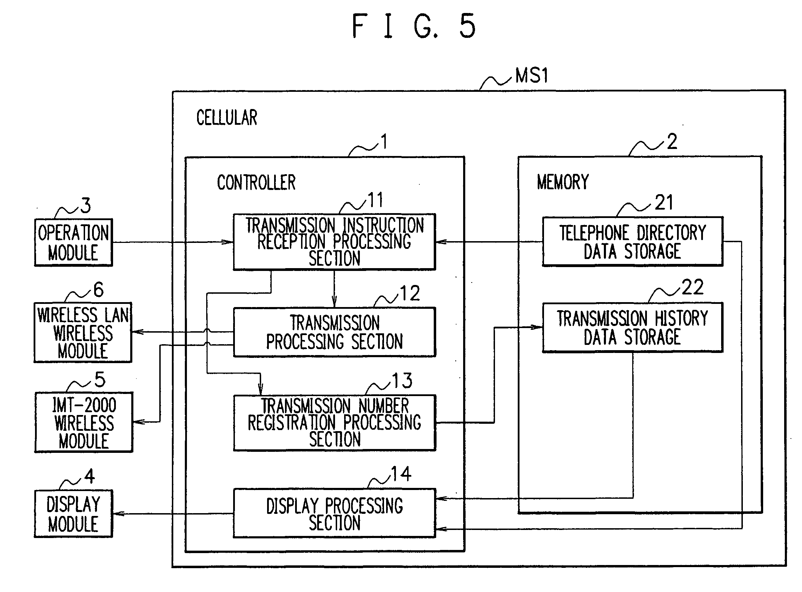

And by installing a predetermined program in the controller 1, a transmission instruction reception processing section 11, a transmission processing section 12, a transmission number registration processing section 13, and a display processing section 14 are constructed as shown in FIG. 5. In addition, a telephone directory data storage 21 and a transmission history data storage 22 are configured in the memory 2. Next, detailed description will be given of these components.

The transmission instruction reception processing section 11 (transmission instruction reception means) receives a transmission instruction inputted by the user from the operation module 3 and then notifies it to the transmission processing section 12 and the transmission number registration processing section 13. In the operation, the transmission instruction is received in a state wherein a dial number directly inputted via the operation module 3 from the user or a dial number selected via the operation module 3 by the user from the dial numbers beforehand registered to the telephone directory data storage 21 and dial numbers stored as the transmission and reception history is specified as a dial number to be transmitted. And further, the transmission instruction is a transmission instruction which is either one of the transmission instruction of WLAN transmission to be transmitted by connecting from the wireless LAN wireless module 6 to the extension network N1 and the transmission instruction of IMT-2000 transmission to be transmitted by connecting from the IMT-2000 wireless module 5 to the cellular network N2; the transmission instruction is received by accepting any key depression operation or any menu selection operation conducted by the user to start transmission.

The transmission processing section 12 (transmission means) executes transmission processing based on the dial number directly inputted or selected by the user as described above. Specifically, first, based on the operation key depressed or the menu selected when the transmission is instructed, it is detected whether the transmission instruction indicates the WLAN transmission from the extension network N1 or the IMT-2000 transmission from the cellular network N2. And if the transmission is the WLAN transmission, it is further determined whether or not the specified dial number is an outside-line number of an extension number. This determination is conducted through a conditional search using, for example, the first number of the specified dial number. For example, an outside-line number example is a cellular number "09012345678" or a fixed telephone number "04456781234", and the first number is zero in many cases. Further, the extension manager can arbitrarily set the extension number and can set the first number to other than zero, for example, "71001" as an extension number example. Therefore, by registering to the terminal, as an outside-line condition, a number (for example, 0) which is not employed as the first number of the extension numbers and which is used as the first number of the outside-line numbers, if the number matches the first number of the dial number, it is determined that the dial data is an outside-line number. And if the specified dial number is determined as an outside-line number, an outside-line special number (outside-line prefix, e.g., 0) which is beforehand registered to the cellular and which is inherent to the extension system is automatically added to the first position of the dial number. Thereafter, the outside-line transmission is executed by use of WLAN. On the other hand, if the dial number does not match the outside-line condition, it is determined that the dial number is an extension number, and the extension transmission is carried out via WLAN by use of the dial data itself without adding the outside-line special number. Moreover, if the transmission operation is associated with the IMT-2000 transmission, the outside-line number determination described above is not conducted and the IMT-2000 transmission is carried out using the dial number itself.

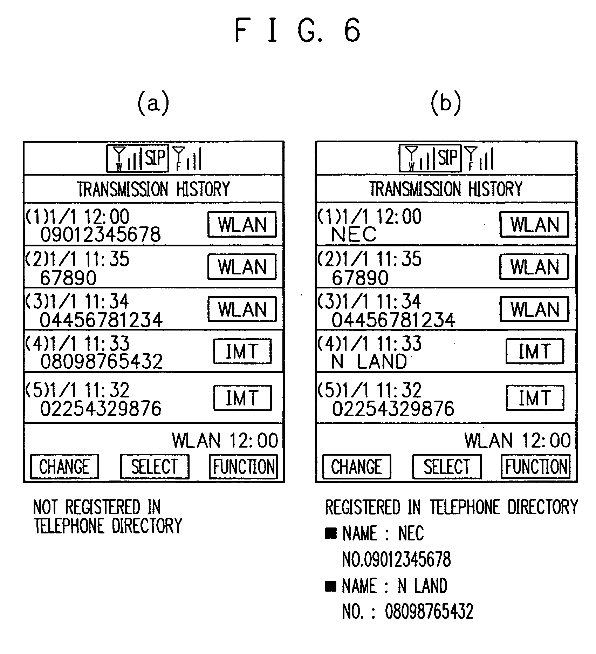

The transmission number registration processing section 13 (transmission number storage processing means) stores in the transmission history data storage 22 (storage means) the dial number which is employed when the transmission processing is executed by the transmission processing section 12. Incidentally, in this embodiment, before the transmission processing, the dial number is stored as the transmission history. Specifically, to conduct the outside-line transmission from the extension network N1, the transmission processing section 12 adds an outside-line special number such as "0" to the first position of the dial number for the transmission; however, this outside-line special number is not added, and only the dial number is stored as the transmission number in the data storage 22. That is, by removing the outside-line special number to be added to the dial number, the dial number itself is stored in the transmission history. For example, for the cellular number "09012345678" or the fixed telephone number "04456781234" described above, the number itself is stored in the transmission history even if the outside-line transmission is conducted from the extension network N1 (reference is to be made to (a) and (b) of FIG. 6, which will be described later). On the other hand, since the special number is not added when the extension transmission is carried out via the extension network N1, the dial number which is the extension number is directly stored in the transmission history. Also, in the transmission to be directly conducted to the outside-line network N2 by the IMT-2000 transmission, the outside-line special number is not added for the transmission, and hence the dial number is directly stored in the transmission history.

The display processing section 14 displays on the display module 4 the transmission history stored in the transmission history data storage 22. FIG. 6 shows a display example thereof. First, FIG. 6(a) shows a case wherein the transmission is conducted using a dial number not registered to the telephone directory data storage 21. As indicated by (1) and (3) of this diagram, when the outside-line transmission is conducted from the extension network N1 (WLAN), the outside-line special number "0" is further and automatically added for the transmission in an actual case as described above; however, only the dial number is recorded and displayed in the transmission history (compare with (1) and (3) of FIG. 1 for reference). Also, when the extension transmission is conducted in the extension network N1 as in (2), the extension number is stored and displayed; (4) and (5) are cases wherein the outside-line transmission is accomplished in the cellular network N2 (IMT) and the transmission number is stored and displayed; and FIG. 6(b) shows a case wherein part of dial numbers are registered to the telephone directory data; as indicated by (1) and (4) of this diagram, since the dial number recorded without adding the outside-line special number matches data in the telephone directory data storage 21, the registered "name" (e.g., NEC or N land) is displayed.

### [Operation]

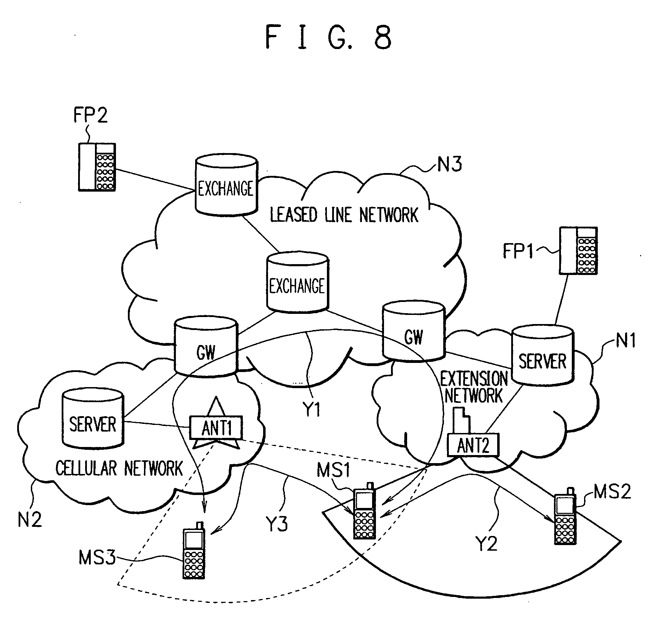

Next, description will be given of operation at transmission by the cellular MS1 described above by referring to the flowchart of FIG. 8 and the overall telephone network diagram of FIG. 8.

First, to conduct call transmission, the user operates the operation module 3 to input digits or to select a dial number from the telephone directory or the like and then conducts operation, e.g., depresses the start key for the WLAN transmission or the IMT-2000 transmission (step S1). Then, the cellular MS1 having received the transmission instruction stores as the transmission history the dial number inputted or selected by the user (dial data (digits, address)) in the transmission history data storage 22 of the memory 2 (step S2). In this situation, even if an outside-line special number is added for the transmission, which will be described later, the dial number is directly stored as the transmission history without adding the outside-line special number. Incidentally, the dial number to which an outside-line special number is not added is naturally stored as it is.

And if the transmission operation by the user indicates the WLAN transmission (yes in step S3), whether the dial number is an outside-line number or an extension number is determined (step S4). The determination is accomplished, for example, based on the conditional search of the first number of the dial number as described above. And if it is determined that the dial number is an outside-line number (yes in step S5), an outside-line special number (outside-line prefix; e.g., 0) which is beforehand registered to the cellular and which is inherent to the extension system is automatically added to the first position of the dial number (step S6). Thereafter, the outside-line transmission is carried out by use of WLAN (step S7; reference is to be made to an arrow Y1 in FIG. 8). On the other hand, if it is determined in step S5 that the dial number does not match the outside-line condition (no in step S5), the WLAN transmission is conducted using the dial data itself without adding the outside-line special number (step S7). That is, the extension transmission is carried out (reference is to be made to an arrow Y2 of FIG. 8). Further, if the transmission operation by the user indicates the IMT-2000 transmission in step S1 (no in step S3), the IMT-2000 transmission is accomplished using the dial number itself without conducting the outside-line number check or the like of step S4 (step S8; reference is to be made to an arrow Y3). The transmission operation has been completely carried out as above.

And then, when the user attempts to display the transmission history, the history is displayed as shown in FIG. 6(a) or 6(b). For example, as shown in (1) and (3) of FIG. 6(a), if the outside-line transmission is accomplished from the extension network N1 (WLAN), although the outside-line special number "0" is further and automatically added in the actual operation for the transmission, only the dial number is recorded and displayed in the transmission history (compare with (1) and (3) of FIG. 1). Also, as shown in (1) and (4) of FIG. 6(b), since the transmission number recorded without the additional outside-line special number matches with data in the telephone directory data storage 21, the registered "name" (e.g., NEC or N land) is displayed. Therefore, the user can easily understand the transmission history.

Moreover, if the outside-line transmission is conducted from the extension network N1 by using the above transmission history (redialing), although the transmission processing is executed by adding the outside-line special number in the transmission processing section 12 as described above, since the dial number is stored as it is, it is possible to ordinarily execute the transmission processing by adding the outside-line special number to the dial number. Hence, the disadvantage in which the outside-line special number is added twice as described in conjunction with the conventional example can be prevented, and usability can be increased when it is used by the user.

### Second Exemplary Embodiment

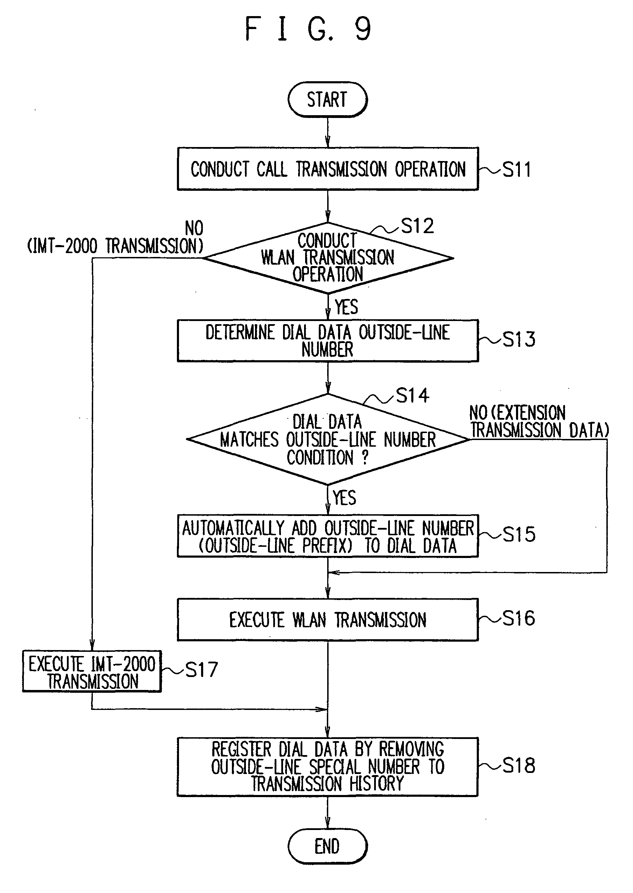

Next, a second exemplary embodiment of the present invention will be described by referring to FIG. 9. FIG. 9 is a flowchart showing operation of a cellular in this embodiment.

### [Structure]

The cellular in this embodiment is connectible, like the cellular MS1 disclosed in the first exemplary embodiment described above, to both of the extension network N1 and the cellular network N2. And as shown in FIGS. 3 to 5, although there is adopted a configuration almost equal to that of the cellular MS1 of the first exemplary embodiment, the second exemplary embodiment differs therefrom in timing to store the transmission history by the transmission number registration processing section 13.

Specifically, the registration processing section 13 of the cellular MS1 of this embodiment detects, after the transmission processing is executed in the transmission processing section 12, whether or not the outside-line special number has been added; if it is determined that the outside-line special number has been added, the processing section 13 operates to delete the outside-line special number to register only the dial number to the transmission history. Here, the detection of the outside-line special number is carried out, for example, such that the transmission processing section 12 keeps information indicating that the processing to automatically add the outside-line special number has been executed and the detection is conducted on the basis of the information. Or, if the user has already inputted the outside-line special number along with the dial number, whether or not the outside-line special number has been added is detected according to the first number thereof (for example, "0" continuously appears two times). And as described above, if it is detected that the outside-line special number has been added, the outside-line special number beforehand set (for example, "0" at the first position) is removed and only the dial number is registered to the transmission history. Incidentally, if the outside-line special number has not been detected, the dial number employed for the transmission is directly registered to the transmission history.

### [Operation]

Next, referring to FIG. 9, description will be given of operation of the cellular in second exemplary embodiment by referring to the flowchart of FIG. 9. In this regard, the operation for the reception of the transmission instruction and that for the transmission processing are almost the same as those of first exemplary embodiment described above and hence will be simply described.

First, to conduct call transmission, the user operates the operation module 3 to input digits or to select a dial number from the telephone directory or the like and then conducts operation, e.g., depresses the start key for the WLAN transmission or the IMT-2000 transmission (step S11).

And if the transmission operation by the user indicates the WLAN transmission (yes in step S12), whether the dial number is an outside-line number or an extension number is determined (step S13). And if it is determined that the dial number is an outside-line number (yes in step S14), an outside-line special number (outside-line prefix; e.g., 0) which is beforehand registered to the cellular and which is inherent to the extension system is automatically added to the first position of the dial number (step S15). Thereafter, the outside-line transmission is carried out by use of WLAN (step S16). On the other hand, if it is determined in step S14 that the dial number does not match the outside-line condition (no in step S14), the WLAN transmission is conducted using the dial data itself without adding the outside-line special number (step S16). That is, the extension transmission is carried out. Further, if the transmission operation by the user indicates the IMT-2000 transmission in step S11 (no in step S12), the IMT-2000 transmission is carried out using the dial number itself without conducting the outside-line number check or the like of step S4 (step S17). The transmission operation has been completely accomplished as above.

Thereafter, the cellular detects whether or not the outside-line special number has been added to the transmission number for which the transmission processing has been actually executed. And if the outside-line special number has been added, the cellular deletes the special number "0" from the transmission number and registers only the dial number as the transmission history in the transmission history data storage 22 of the memory 2 (step S18). Incidentally, the dial number transmitted without the additional outside-line special number is naturally stored as it is.

And then, when the user attempts to display the transmission history, the history is displayed as shown in FIG. 6(a) or 6(b) in a similar way as described above. For example, as shown in (1) and (3) of FIG. 6(a), if the outside-line transmission is accomplished from the extension network N1 (WLAN), although the outside-line special number "0" is automatically and further added in the actual operation for the transmission, only the dial number is recorded and displayed in the transmission history. Also, as shown in (1) and (4) of FIG. 6(b), in a case wherein the transmission number recorded without the additional outside-line special number matches with data in the telephone directory data storage 21, the registered "name" (e.g., NEC or N land) is displayed. Therefore, the user can easily understand the transmission history.

Moreover, if the outside-line transmission is conducted from the extension network N1 by using the above transmission history (redialing), although the transmission processing is executed by adding the outside-line special number in the transmission processing section 12 as described above, since the dial number is stored as it is, it is possible to ordinarily executes the transmission processing by adding the outside-line special number to the dial number. Hence, the disadvantage in which the outside-line special number is added twice as described in conjunction with the conventional example can be prevented, and usability can be increased when it is utilized by the user.

Incidentally, in the description, the cellular in first and second exemplary embodiments described above is configured such that the transmission history registration processing is executed before and after the transmission processing; however, as described above, registration processing of the dial number from which the outside-line special number is removed is not limitatively executed at timing described above, but may be executed at any timing during the transmission processing or the like.

### INDUSTRIAL APPLICABILITY

The present invention may be used for all telephone terminals such as a cellular and a fixed telephone which have a function to display the transmission history, namely, the present invention has industrial applicability.

### BRIEF DESCRIPTION OF DRAWINGS

[FIG. 1] is a diagram showing an example of the transmission history screen displayed on a cellular in a conventional example.
[FIG. 2] is a schematic diagram showing structure of an overall telephone network.
[FIG. 3] is a diagram showing an external appearance of the cellular.
[FIG. 4] is a block diagram showing structure of the cellular.
[FIG. 5] is a functional block diagram showing structure of a controller and a memory of the cellular.
[FIG. 6] is a diagram showing an example of the transmission history screen displayed on the cellular.

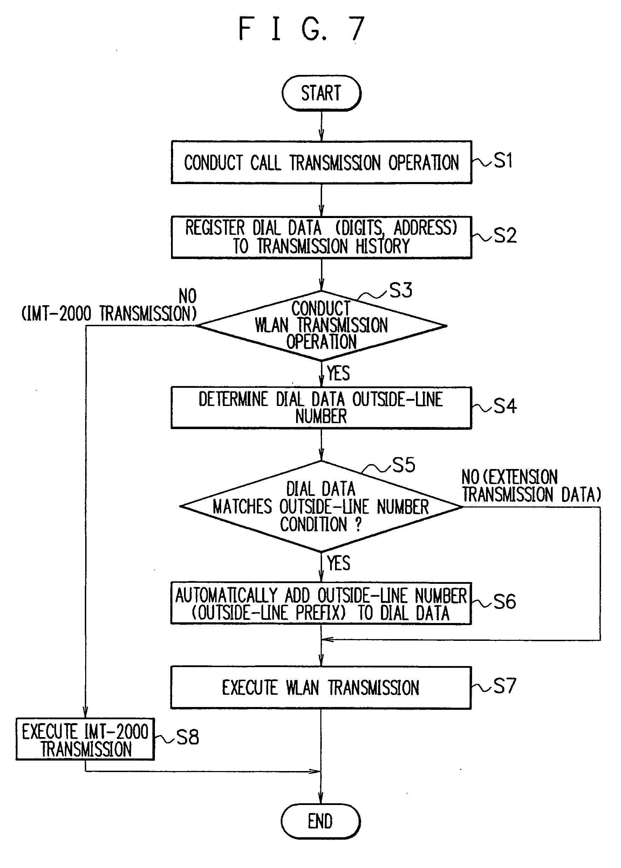

[FIG. 7] is a flowchart showing operation of the cellular.
[FIG. 8] is an explanatory diagram showing the transmission operation of the cellular.
[FIG. 9] is a flowchart showing operation of the cellular in second exemplary embodiment.

### DESCRIPTION OF REFERENCE NUMERALS

- 1: Controller
- 2: Memory
- 3: Operation module
- 4: Display module
- 5: IMT-2000 wireless module
- 6: Wireless LAN wireless module
- 11: Transmission instruction reception processing section
- 12: Transmission processing section
- 13: Transmission number registration processing section
- 14: Display processing section
- 21: Telephone directory data storage
- 22: Transmission history data storage
- MS1: Cellular
- N1: Extension network
- N2: Outside-line network

## Claims

1. A cellular telephone terminal (MS1), comprising:
transmission instruction reception means (11) adapted to receive a transmission instruction in which a dial number is specified;
transmission means (12) adapted to execute transmission processing based on the specified dial number;
transmission number storage processing means (13) adapted to store a transmission number in storage means (22) and
communication means (5, 6) respectively connectible to an extension network (N1) enabling an extension call and to a cellular network (N2), **characterized in that**
the transmission number storage processing means (13) is adapted to store the dial number as the transmission number by removing a predetermined outside-line special number which is to be added or has been added to the dial number specified in the transmission instruction reception means (11), and
the transmission means (12) is adapted to detect whether or not the transmission instruction is an outside-line transmission instruction via the extension network (N1), and to execute, if the transmission instruction is an outside-line transmission instruction via the extension network (N1), transmission processing based on the number obtained by adding the outside-line special number to the specified dial number.

2. The telephone terminal in accordance with claim 1, **characterized in that** the transmission number storage processing means (13) is adapted to operate before the transmission means (12) executes the transmission processing and to directly store the dial number specified in the transmission instruction reception means (11) as the transmission number.

3. The telephone terminal in accordance with claim 1, **characterized in that** the transmission number storage processing means (13) is adapted to detect the outside-line special number already added to the dial number and to delete the outside-line special number to store the dial number as the transmission number to be displayed in a transmission history.

4. The telephone terminal in accordance with claim 1, **characterized in that** the transmission means (12) is adapted to detect whether the transmission instruction is an outside-line transmission or an extension transmission on the basis of the specified dial number, and to execute, if the transmission is an outside-line transmission via the extension network (N1), the transmission processing based on the number obtained by adding the outside-line special number to the specified dial number.

5. The telephone terminal in accordance with claim 3, further comprising a telephone directory data storage (21), wherein in a case where the dial number matches with data in the telephone directory data storage (21), the name registered in the telephone directory data storage (21) is displayed in the transmission history.

6. A transmission method performed by a cellular telephone terminal (MS1), comprising the steps of:
receiving a transmission instruction in which a dial number is specified; and
executing transmission processing to record a transmission number before and after the transmission processing, wherein the telephone terminal is connectible to an extension network (N1) enabling an extension call and to a cellular network (N2), **characterised in that**
the telephone terminal (MS1) records, when recording the transmission number, the dial number by removing a predetermined outside-line special number which is to be added or has been added to a dial number of a transmission destination, as the transmission number,
the telephone terminal detects whether or not the transmission instruction is an outside-line transmission instruction via the extension network (N1), and executes, if the transmission instruction is an outside-line transmission instruction via the extension network (N1), transmission processing based on the number obtained by adding the outside-line special number to the specified dial number.

7. The transmission method in accordance with claim 6, **characterized in that** the telephone terminal directly stores the specified dial number as the transmission number before the transmission processing.

8. The transmission method in accordance with claim 6, **characterized in that** the telephone terminal detects the outside-line special number already added to the specified dial number and deletes the outside-line special number to store the dial number as the transmission number to be displayed in a transmission history.

9. The transmission method in accordance with claim 6, **characterized in that** the telephone terminal detects whether the transmission instruction is an outside-line transmission or an extension transmission on the basis of the specified dial number, and executes, if the transmission is an outside-line transmission via the extension network (N1), the transmission processing based on the number obtained by adding the outside-line special number to the specified dial number.

10. The transmission method in accordance with claim 8, wherein in a case where the dial number matches with data in a telephone directory data storage (21), the name registered in the telephone directory data storage (21) is displayed in the transmission history.

11. A computer program which makes a cellular telephone terminal to execute the method in accordance with any one of claims 6 to 10.

## Patentansprüche

1. Mobiltelefongerät (MS 1) mit:
einer Übertragungsbefehlempfangseinrichtung (11), die dazu geeignet ist, einen Übertragungsbefehl zu empfangen, in dem eine Rufnummer spezifiziert ist;
einer Übertragungseinrichtung (12), die dazu geeignet ist, basierend auf der spezifizierten Rufnummer eine Übertragungsverarbeitung auszuführen;
einer Übertragungsnummerspeicherverarbeitungseinrichtung (13), die dazu geeignet ist, eine Übertragungsnummer in einer Speichereinrichtung (22) zu speichern; und
einer Kommunikationseinrichtung (5, 6), die mit einem Nebenstellennetz (N1), das einen Nebenstellenanruf ermöglicht, und mit einem Mobilnetz (N2) verbindbar ist;
**dadurch gekennzeichnet, dass**
die Übertragungsnummerspeicherverarbeitungseinrichtung (13) dazu geeignet ist, die Rufnummer durch Entfernen einer vorgegebenen Amtskennzahl, die der in der Übertragungsbefehlempfangseinrichtung (11) spezifizierten Rufnummer hinzugefügt werden soll oder hinzugefügt worden ist, als die Übertragungsnummer zu speichern; und
die Übertragungseinrichtung (12) dazu geeignet ist, zu erfassen, ob der Übertragungsbefehl ein Amtsleitungsübertragungsbefehl über das Nebenstellennetz (N1) ist, und, wenn der Übertragungsbefehl ein Amtsleitungsübertragungsbefehl über das Nebenstellennetz (N1) ist, die Übertragungsverarbeitung basierend auf der durch Hinzufügen der Amtskennzahl zur spezifizierten Rufnummer erhaltenen Nummer auszuführen.

2. Telefongerät nach Anspruch 1, **dadurch gekennzeichnet, dass** die Übertragungsnummerspeicherverarbeitungseinrichtung (13) dazu geeignet ist, aktiviert zu werden, bevor die Übertragungseinrichtung (12) die Übertragungsverarbeitung ausführt, und die in der Übertragungsbefehlempfangseinrichtung (11) spezifizierte Rufnummer direkt als die Übertragungsnummer zu speichern.

3. Telefongerät nach Anspruch 1, **dadurch gekennzeichnet, dass** die Übertragungsnummerspeicherverarbeitungseinrichtung (13) dazu geeignet ist, die der Rufnummer bereits hinzugefügte Amtskennzahl zu erfassen und die Amtskennzahl zu löschen, um die Rufnummer als die in einem Übertragungsprotokoll darzustellende Übertragungsnummer zu speichern.

4. Telefongerät nach Anspruch 1, **dadurch gekennzeichnet, dass** die Übertragungseinrichtung (12) dazu geeignet ist, auf der Basis der spezifizierten Rufnummer zu erfassen, ob der Übertragungsbefehl ein Amtsleitungs- oder ein Nebenstellenübertragungsbefehl ist, und, wenn der Übertragungsbefehl ein Amtsleitungsübertragungsbefehl über das Nebenstellennetz (N1) ist, die Übertragungsverarbeitung basierend auf der durch Hinzufügen der Amtskennzahl zur spezifizierten Rufnummer erhaltenen Nummer auszuführen.

5. Telefongerät nach Anspruch 3, ferner mit einem Telefonverzeichnisdatenspeicher (21), wobei, wenn die Rufnummer mit Daten im Telefonverzeichnisdatenspeicher (21) übereinstimmt, der im Telefonverzeichnisdatenspeicher (21) gespeicherte Name im Übertragungsprotokoll angezeigt wird.

6. Übertragungsverfahren, das durch ein Mobiltelefongerät (MS 1) ausgeführt wird, mit den Schritten:
Empfangen eines Übertragungsbefehls, in dem eine Rufnummer spezifiziert ist; und
Ausführen einer Übertragungsverarbeitung zum Speichern einer Übertragungsnummer vor und nach der Übertragungsverarbeitung, wobei das Telefongerät mit einem Nebenstellennetz (N1), das einen Nebenstellenanruf ermöglicht, und mit einem Mobilnetz (N2) verbindbar ist;
**dadurch gekennzeichnet, dass**
das Telefongerät (MS1) beim Speichern der Übertragungsnummer die Ruf-nummer durch Entfernen einer vorgegebenen Amtskennzahl, die der Rufnummer eines Übertragungsziels hinzugefügt werden soll oder hinzugefügt worden ist, als die Übertragungsnummer speichert; und
das Telefongerät erfasst, ob der Übertragungsbefehl ein Amtsleitungsübertragungsbefehl über das Nebenstellennetz (N1) ist oder nicht, und, wenn der Übertragungsbefehl ein Amtsleitungsübertragungsbefehl über das Nebenstellennetz (N1) ist, eine Übertragungsverarbeitung basierend auf der durch Hinzufügen der Amtskennzahl zur spezifizierten Rufnummer erhaltenen Nummer ausführt.

7. Verfahren nach Anspruch 6, **dadurch gekennzeichnet, dass** das Telefongerät die spezifizierte Rufnummer vor der Übertragungsverarbeitung direkt als die Übertragungsnummer speichert.

8. Verfahren nach Anspruch 6, **dadurch gekennzeichnet, dass** das Telefongerät die Amtskennzahl erfasst, die der spezifizierten Rufnummer bereits hinzugefügt worden ist, und die Amtskennzahl löscht, um die Rufnummer als die in einem Übertragungsprotokoll darzustellende Übertragungsnummer zu speichern.

9. Verfahren nach Anspruch 6, **dadurch gekennzeichnet, dass** das Telefongerät auf der Basis der spezifizierten Rufnummer erfasst, ob der Übertragungsbefehl ein Amtsleitungsübertragungsbefehl oder ein Nebenstellenübertragungsbefehl ist, und, wenn der Übertragungsbefehl ein Amtsleitungsübertragungsbefehl über das Nebenstellennetz (N1) ist, die Übertragungsverarbeitung basierend auf der durch Hinzufügen der Amtskennzahl zur spezifizierten Rufnummer erhaltenen Nummer ausführt.

10. Verfahren nach Anspruch 8, wobei, wenn die Rufnummer mit Daten in einem Telefonverzeichnisdatenspeicher (21) übereinstimmt, der im Telefonverzeichnisdatenspeicher (21) gespeicherte Name im Übertragungsprotokoll angezeigt wird.

11. Computerprogramm, das veranlasst, dass ein Mobiltelefongerät das Verfahren nach einem der Ansprüche 6 bis 10 ausführt.

## Revendications

1. Terminal téléphonique cellulaire (M51), comprenant :
un moyen de réception (11) d'instruction de transmission prévu pour recevoir une instruction de transmission où un numéro d'appel est spécifié ;
un moyen de transmission (12) prévu pour exécuter un traitement de transmission sur la base du numéro d'appel spécifié ;
un moyen de traitement de mémorisation (13) du numéro de transmission prévu pour mémoriser un numéro de transmission dans un moyen de stockage (22), et
des moyens de communication (5, 6) pouvant être connectés respectivement à un réseau d'extension (N1) permettant un appel d'extension, et à un réseau cellulaire (N2),
**caractérisé en ce que** le moyen de traitement de mémorisation (13) du numéro de transmission est prévu pour mémoriser le numéro d'appel en tant que numéro de transmission par suppression d'un numéro spécifique de ligne extérieure prédéterminé qui doit être ajouté ou a été ajouté au numéro d'appel spécifié dans le moyen de réception (11) d'instruction de transmission, et
**en ce que** le moyen de transmission (12) est prévu pour détecter si l'instruction de transmission est ou non une instruction de transmission de ligne extérieure par l'intermédiaire du réseau d'extension (N1), et pour exécuter, si l'instruction de transmission est une instruction de transmission de ligne extérieure par l'intermédiaire du réseau d'extension (N1), un traitement de transmission sur la base du numéro obtenu par ajout du numéro spécifique de ligne extérieure au numéro d'appel spécifié.

2. Terminal téléphonique selon la revendication 1, **caractérisé en ce que** le moyen de traitement de mémorisation (13) du numéro de transmission est prévu pour fonctionner avant que le moyen de transmission (12) exécute le traitement de transmission, et pour mémoriser le numéro d'appel spécifié en tant que numéro de transmission directement dans le moyen de réception (11) d'instruction de transmission.

3. Terminal téléphonique selon la revendication 1, **caractérisé en ce que** le moyen de traitement de mémorisation (13) du numéro de transmission est prévu pour détecter le numéro spécifique de ligne extérieure déjà ajouté au numéro d'appel, et pour supprimer le numéro spécifique de ligne extérieure pour mémoriser le numéro d'appel en tant que numéro de transmission à afficher dans un historique de transmission.

4. Terminal téléphonique selon la revendication 1, **caractérisé en ce que** le moyen de transmission (12) est prévu pour détecter si l'instruction de transmission est une transmission de ligne extérieure ou une transmission d'extension sur la base du numéro d'appel spécifié, et pour exécuter, si l'instruction de transmission est une instruction de transmission de ligne extérieure par l'intermédiaire du réseau d'extension (N1), le traitement de transmission sur la base du numéro obtenu par ajout du numéro spécifique de ligne extérieure au numéro d'appel spécifié.

5. Terminal téléphonique selon la revendication 3, comprenant en outre une mémoire de données (21) d'annuaire téléphonique, où, si le numéro d'appel correspond avec des données de la mémoire de données (21) d'annuaire téléphonique, le nom enregistré dans la mémoire de données (21) d'annuaire téléphonique est affiché dans l'historique de transmission.

6. Procédé de transmission exécuté par un terminal téléphonique cellulaire (M51), comprenant les étapes suivantes :
réception d'une instruction de transmission où un numéro d'appel est spécifié ; et
exécution d'un traitement de transmission pour enregistrer un numéro de transmission avant et après le traitement de transmission, le terminal téléphonique pouvant être connecté à un réseau d'extension (N1) permettant un appel d'extension, et à un réseau cellulaire (N2),
**caractérisé en ce que** le terminal téléphonique (M51) enregistre, quand le numéro de transmission est enregistré, le numéro d'appel en supprimant un numéro spécifique de ligne extérieure prédéterminé qui doit être ajouté ou a été ajouté à un numéro d'appel d'une destination de transmission, en tant que numéro de transmission,
le terminal téléphonique détecte si l'instruction de transmission est ou non une instruction de transmission de ligne extérieure par l'intermédiaire du réseau d'extension (N1), et exécute, si l'instruction de transmission est une instruction de transmission de ligne extérieure par l'intermédiaire du réseau d'extension (N1), un traitement de transmission sur la base du numéro obtenu par ajout du numéro spécifique de ligne extérieure au numéro d'appel spécifié.

7. Procédé de transmission selon la revendication 6, **caractérisé en ce que** le terminal téléphonique mémorise directement le numéro d'appel spécifié en tant que numéro de transmission avant le traitement de transmission.

8. Procédé de transmission selon la revendication 6, **caractérisé en ce que** le terminal téléphonique détecte le numéro spécifique de ligne extérieure déjà ajouté au numéro d'appel spécifié, et supprime le numéro spécifique de ligne extérieure pour mémoriser le numéro d'appel en tant que numéro de transmission à afficher dans un historique de transmission.

9. Procédé de transmission selon la revendication 6, **caractérisé en ce que** le terminal téléphonique détecte si l'instruction de transmission est une transmission de ligne extérieure ou une transmission d'extension sur la base du numéro d'appel spécifié, et exécute, si l'instruction de transmission est une instruction de transmission de ligne extérieure par l'intermédiaire du réseau d'extension (N1), le traitement de transmission sur la base du numéro obtenu par ajout du numéro spécifique de ligne extérieure au numéro d'appel spécifié.

10. Procédé de transmission selon la revendication 8, où, si le numéro d'appel correspond avec des données de la mémoire de données (21) d'annuaire téléphonique, le nom enregistré dans la mémoire de données (21) d'annuaire téléphonique est affiché dans l'historique de transmission.

11. Programme informatique activant l'exécution du procédé selon les revendications 6 à 10 par un terminal téléphonique cellulaire.
